# EUROPEAN PATENT SPECIFICATION

(11) **EP 3 480 528 B1**
(45) Date of publication and mention of the grant of the patent: **30.11.2022**
(21) Application number: 18197976.6
(22) Date of filing: 01.10.2018
(51) Int. Cl.: F24F 7/06, F24F 12/00, F24F 7/00, B01D 46/10, B01D 46/24, B01D 46/00, F24F 13/28

(54) **AIR EXCHANGING DEVICE**
LUFTAUSTAUSCHVORRICHTUNG
DISPOSITIF ÉCHANGEUR D'AIR

(30) Priority: 01.11.2017 TW 106137802
(43) Date of publication of application: 08.05.2019
(73) Proprietor: Sunonwealth Electric Machine Industry Co., Ltd., Kaohsiung City / Taiwan, R.O.C. (TW)
(72) Inventor: HORNG, Alex, Kaohsiung, Taiwan, R.O.C. (TW); HU, Wan-Ling, Kaohsiung, Taiwan, R.O.C. (TW); LYU, Li-Yang, Kaohsiung, Taiwan, R.O.C. (TW)
(74) Representative: Louis Pöhlau Lohrentz

(56) References cited:
- EP-A1- 2 894 412
- EP-A2- 1 767 873
- EP-A2- 2 461 127
- EP-B1- 1 767 873
- WO-A1-2014/180279
- CN-B- 101 813 362
- CN-U- 203 083 030
- DE-A1- 4 402 302
- US-A1- 2006 172 693
- US-A1- 2007 227 362
- US-A1- 2011 059 686
- US-B1- 6 241 600

## Description

### BACKGROUND OF THE INVENTION

### 1. Field of the Invention

The present invention generally relates to an air exchanging device and, more particularly, to an air exchanging device which circulates the air between the indoor and outdoor spaces.

### 2. Description of the Related Art

A conventional air exchanging device is generally mounted to a wall of the building. An inner side of the wall is the indoor space, and an outer side of the wall is the outdoor space. The wall needs to form an air inlet and an air outlet. A fan is mounted to each of the inlet and the air outlet. During the operation of the fans, the external air can be guided into the indoor space via the air inlet, and the internal air can be guided to the outdoor space. Accordingly, the ventilation effect is attained.

However, the installation of the fans requires the creation of different installation holes for installation purpose of two types of fans. Disadvantageously, the construction and assembly of the fans are inconvenient, and the defect in appearance of the wall results. In addition, since the conventional air exchanging device does not include an air filter, the user needs to purchase an air cleaner. Thus, the use of the conventional air exchanging device is inconvenient.

However, it is necessary to improve the conventional air exchanging device.

### SUMMARY OF THE INVENTION

It is therefore the objective of the invention to provide an air exchanging device which integrates all of the required components in one and allows for easy installation and replacement for a filter.

According to the present invention there is proposed an air exchange device as defined in claim 1. Preferred embodiments are defined in the dependent claims.

The air exchanging device according to the invention is mounted to a wall. An inner side of the wall is the indoor space, and an outer side of the wall is the outdoor space. The wall has an installation hole. The air exchanging device includes a housing, a first fan unit and a second fan unit. The housing has a compartment. The housing has a first through-hole, a second through-hole and a third through-hole. The first fan unit is received in the compartment and includes a first air inlet intercommunicating with the second through-hole, and a first air outlet intercommunicating with the first through-hole. The second fan unit is received in the compartment. The second fan unit includes a second air inlet intercommunicating with the third through-hole, and a second air outlet intercommunicating with the second through-hole.

Based on this, with the air exchanging device according to the invention, the wall can have only a single installation hole. The second through-hole of the housing intercommunicates with a tube assembly mounted to the installation hole of the wall. In this arrangement, during the operation of the first and second fan units, the external air can be guided from the second through-hole to the first air inlet of the first fan unit, and then is guided to the indoor space via the first air outlet of the first fan unit. Furthermore, the internal air can also be guided from the second air inlet to the second air outlet of the second fan unit, and then is guided to the outdoor space via the second through-hole. Accordingly, the air is circulated between the indoor and outdoor spaces to provide a desired ventilation effect.

In an example, the second through-hole includes an inlet portion intercommunicating with the first air inlet, and an outlet portion intercommunicating with the second air outlet. Accordingly, the wall requires only one installation hole for entry and exit of the air.

In the example, the second through-hole of the housing is divided into the inlet portion and the outlet portion by an air guider. Accordingly, turbulence is avoided.

In the example, the air guider includes at least a tube assembly. Accordingly, an air-guiding effect is improved.

In the example, the tube assembly includes a tube divider disposed therein and dividing an interior of the tube assembly into a first air channel and a second air channel. The first air channel intercommunicates with the inlet portion of the second through-hole and the second air channel intercommunicates with the outlet portion of the second through-hole. Accordingly, the first and second air channels are able to guide the air.

In the example, the tube divider is integrally formed with a plurality of fins received in the first and second air channels. Accordingly, the heat exchange effect is improved.

In the example, the air exchanging device further includes a first filter disposed in the compartment and dividing the compartment into a first compartment and a second compartment. Accordingly, the air can be filtered.

In the example, the first filter includes a first side board having a first pulling portion, and the housing includes an inner member having a fourth through-hole corresponding to the first side board. Accordingly, convenient replacement is achieved.

In the example, the housing includes a rail, and the first filter is detachably mounted to the rail. Accordingly, convenient replacement of the first filter is achieved.

In the example, the housing includes a grid plate disposed at the first through-hole. Accordingly, the intrusion of foreign debris though the first air outlet, such as insects, can be prevented.

The air exchanging device further includes a second filter coupled with the first fan unit and covering the first air inlet. The second filter includes a first end, a second end, and a hole extending from the first end to the second end thereof. Accordingly, the air can be filtered.

In the example, a filtration wall is disposed between the first and second ends of the second filter. Accordingly, the air-guiding effect in the lateral direction can be improved and the thickness of the housing can be reduced.

In the example, the first end of the second filter is coupled with a third side board, the first fan unit includes a plurality of first positioning portions surrounding the first air inlet thereof, and the third side board includes a plurality of second positioning portions coupled with the plurality of first positioning portions. Accordingly, the assembly is convenient.

In the example, the plurality of second positioning portions is coupled with the plurality of first positioning portions by ways of magnetic attraction, engagement or adhesion. Accordingly, the assembly is convenient.

In the example, the second end of the second filter is coupled with a second side board, and the hole forms an air-guiding space. Accordingly, the air can be guided through the first air inlet more smoothly.

In the example, the second side board includes a second pulling portion, and the housing includes an inner member having a fifth through-hole corresponding to the second filter. Accordingly, convenient replacement of the second filter is achieved.

In the example, an air freshener is disposed in the air-guiding space and is hanged on a post or a hook. Accordingly, the air is scented with fragrance.

In the example, the air-guiding space includes a receiving portion receiving a fragrance liquor. Accordingly, the air is scented with fragrance.

In the example, the air exchanging device further includes a second filter coupled with the first fan unit and covering the first air inlet, and the second filter has interstices smaller than or equal to that of the first filter. Accordingly, the small particles can be filtered.

In the example, the first filter includes a filtration material which meets an air quality standard of PM 2.5, a High Efficiency Particulate Air filter, an Ultra Low Penetration Air filter, or a Volatile Organic Compounds Air filter. Accordingly, the small particles and unpleasant smell of the air can be filtered out.

In the example, the second filter includes a filtration material which meets an air quality standard of PM 2.5, a High Efficiency Particulate Air filter, an Ultra Low Penetration Air filter, or a Volatile Organic Compounds Air filter. Accordingly, the small particles and unpleasant smell of the air can be filtered out.

In the example, the first, second and third through-holes are formed on different faces of the housing. Accordingly, the smoothness in the flow of air can be improved.

In the example, the first filter is a Volatile Organic Compounds Air filter and the second filter includes a filtration material which meets an air quality standard of PM 2.5. Accordingly, the small particles and unpleasant smell of the air can be filtered out.

### BRIEF DESCRIPTION OF THE DRAWINGS

The present invention will become more fully understood from the detailed description given hereinafter and the accompanying drawings which are given by way of illustration only, and thus are not limitative of the present invention, and wherein:
FIG. 1 is an exploded, perspective view of an air exchanging device according to a first embodiment of the invention.
FIG. 2 is a partially assembled view of the air exchanging device in FIG. 1.
FIG. 3 shows the air exchanging device in FIG. 2 which is coupled with an air guider.
FIG. 4 is an exploded, perspective view of an air exchanging device according to a second embodiment of the invention.
FIG. 5 a partially assembled view of the air exchanging device in FIG. 4.
FIG. 6 is an exploded, perspective view of an air exchanging device according to a third embodiment of the invention.
FIG. 7 a partially assembled view of the air exchanging device in FIG. 6.
FIG. 8 shows an air freshener to be disposed in a second filter of the air exchanging device of the third embodiment of the invention.
FIG. 9 shows a fragrance liquor to be disposed in the second filter of the air exchanging device of the third embodiment of the invention.
FIG. 10 is a partially assembled, perspective view of an air exchanging device according to a fourth embodiment of the invention.

In the various figures of the drawings, the same numerals designate the same or similar parts. Furthermore, when the terms "first", "second", "third", "fourth", "inner", "outer" and similar terms are used hereinafter, it should be understood that these terms have reference only to the structure shown in the drawings as it would appear to a person viewing the drawings, and are utilized only to facilitate describing the invention.

### DETAILED DESCRIPTION OF THE INVENTION

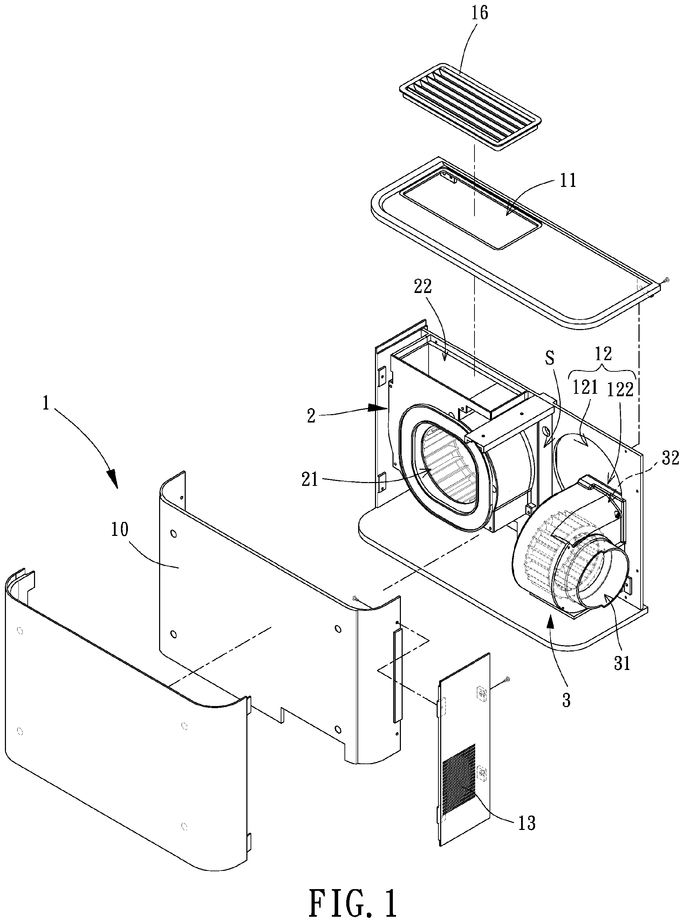

FIG. 1 shows an air exchanging device according to a first embodiment for illustrating the third and fourth embodiments of the invention only. The first embodiment itself is not according to the invention. The air exchanging device is mounted to a wall. An inner side of the wall is the indoor space, and an outer side of the wall is the outdoor space. The wall has an installation hole. The air exchanging device includes a housing 1, a first fan unit 2 and a second fan unit 3. The housing 1 has a compartment **S.** The first fan unit 2 and the second fan unit 3 are disposed in the compartment **S.**

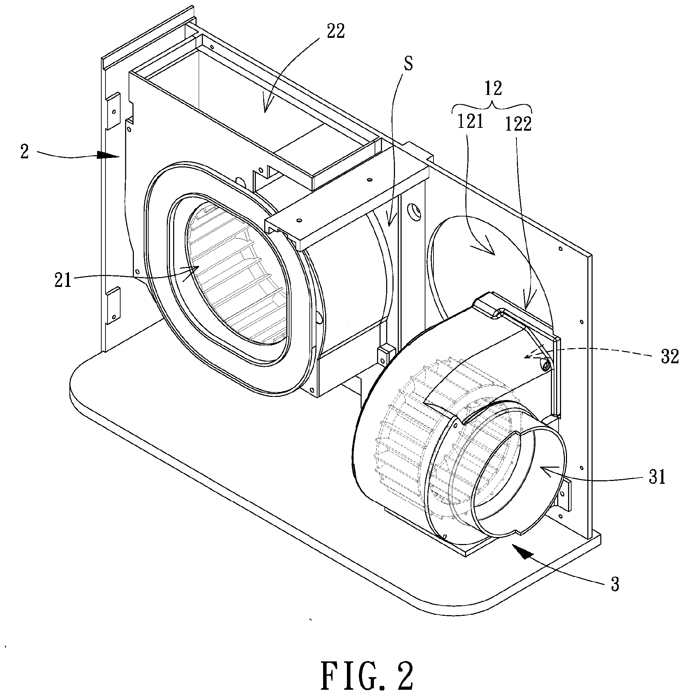

Referring to FIGS. 1 and 2, the housing 1 includes a first through-hole 11, a second through-hole 12 and a third through-hole 13. The first through-hole 11, the second through-hole 12 and the third through-hole 13 are formed on different faces of the housing 1. The first through-hole 11 and the third through-hole 13 intercommunicate with the
indoor space. The second through-hole 12 intercommunicates with the outdoor space. The housing 1 includes a grid plate 16 disposed at the first through-hole 11.

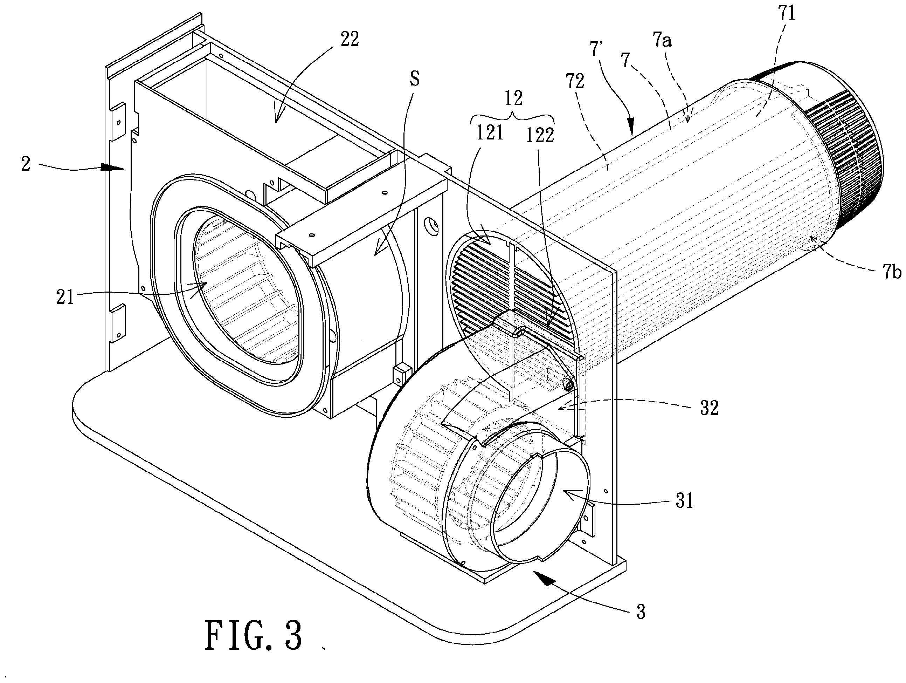

Referring to FIGS. 2 and 3, the second through-hole 12 can be divided into an inlet portion and an outlet portion by an air guider 7'. The air guider 7' is disposed at the installation hole of the wall. The air guider 7' at least includes a tube assembly 7. In this embodiment, the second through-hole 12 is connected with a tube assembly 7, which divides the second through-hole 12 into an inlet portion 121 and an outlet portion 122. The tube assembly 7 includes a tube divider 71. The tube divider 71 is disposed in the tube assembly 7 and divides an interior of the tube assembly 7 into a first air channel 7a and a second air channel 7b. The first air channel 7a intercommunicates with the inlet portion 121 and the second air channel 7b intercommunicates with the outlet portion 122. In addition, the tube divider 71 is integrally formed with a plurality of fins 72. The plurality of fins 72 is received in the first air channel 7a and the second air channel 7b.

Referring to FIGS. 1, 2 and 3 again, the first fan unit 2 is received in the compartment S of the housing 1. The first fan unit 2 includes a first air inlet 21 and a first air outlet 22. The first air inlet 21 intercommunicates with the inlet portion 121 of the second through-hole 12 of the housing 1 and the first air channel 7a of the tube assembly 7. The first air outlet 22 intercommunicates with the first through-hole 11 of the housing 1.

Still referring to FIGS. 1, 2 and 3, the second fan unit 3 is received in the compartment **S** of the housing 1. The second fan unit 3 includes a second air inlet 31 and a second air outlet 32. The second air inlet 31 intercommunicates with the third through-hole 13 of the housing 1. The second air outlet 32 intercommunicates with the outlet portion 122 of the second through-hole 12 of the housing 1 and the second air channel 7b of the air guider 7'.

Referring to FIGS. 2 and 3, based on the above structure, during the use of the air exchanging device according to the invention, the wall can have only a single installation hole. The second through-hole 12 of the housing 1 intercommunicates with the tube assembly 7 mounted to the installation hole of the wall. In this arrangement, during the operation of the first fan unit 2 and the second fan unit 3, the external air can be guided from the inlet portion 121 of the second through-hole 12 to the first air inlet 21 of the first fan unit 2, and then is guided to the indoor space via the first air outlet 22 of the first fan unit 2. Furthermore, the internal air can also be guided from the second air inlet 31 to the second air outlet 32 of the second fan unit 3, and then is guided to the outdoor space via the outlet portion 122 of the second through-hole 12. Accordingly, the air is circulated between the indoor and outdoor spaces to provide a desired ventilation effect.

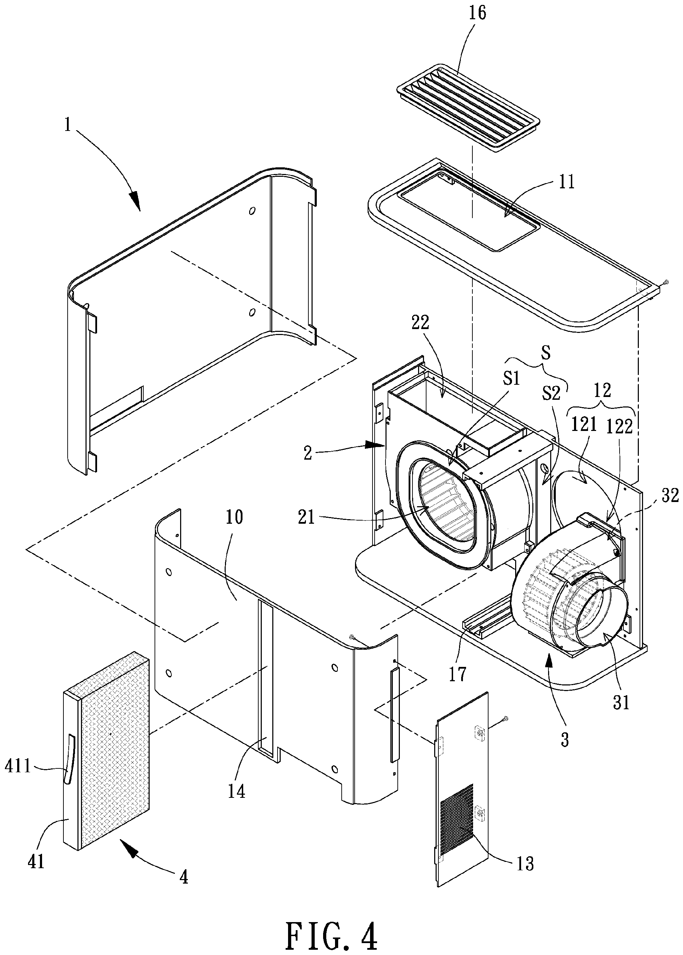

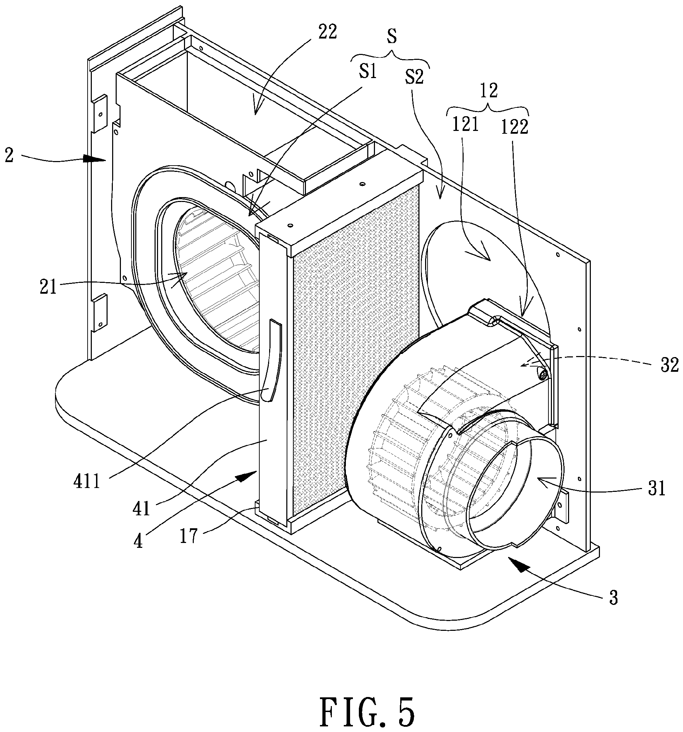

FIGS. 4 and 5 show an air exchanging device according to a second embodiment for illustrating the third and fourth embodiments of the invention only. The second embodiment itself is not according to the invention. The second embodiment is substantially the same as the first embodiment except for that the air exchanging device in the second embodiment further includes a first filter 4 and the housing 1 includes a rail 17. The first filter 4 is detachably mounted to the rail 17 and divides the compartment **S** into a first compartment **S1** and a second compartment **S2.** The first fan unit 2 is received in the first compartment **S1** and the second fan unit 3 is received in the second compartment **S2.** The first filter 4 includes a first side board 41. The housing 1 includes an inner member 10 having a fourth through-hole 14 corresponding to the first side board 41, such that the first filter 4 can be inserted into or withdrawn from the compartment **S** via the fourth through-hole 14. The first side board 41 includes a first pulling portion 411. When it is needed to clean or change the first filter 4, the first filter 4 can smoothly slide along the rail 17 and can be withdrawn from the
compartment **S** via the fourth through-hole 14 easily. The first pulling portion 411 can be in the form of a grip or a strip.

Referring to FIGS. 4 and 5, it is noted that the first filter 4 preferably includes a filtration material which can provide a filtration function and meets the air quality standard of PM 2.5 or similar. Based on this, the first filter 4 is able to filter out the particulate matter of around 2.5 µm or above, ensuring that the air flowing through the first air inlet 21 of the first fan unit 2 meets the air quality standard of PM 2.5. Besides, the first filter 4 may be a High Efficiency Particulate Air filter (HEPA filter), an Ultra Low Penetration Air filter (ULPA filter) or a Volatile Organic Compounds Air filter (VOC filter). One of the filters can be chosen depending on the requirement. However, the above is not used to limit the invention.

Referring to FIGS. 4 and 5, based on the above structure, the external air that is drawn from the inlet portion 121 of the second through-hole 12 will pass through the first filter 4 during the operation of the first fan unit 2 and the second fan unit 3. The first filter 4 filters the air passing therethrough. The filtered air is guided to the first air inlet 21 of the first fan unit 2 and then is guided into the indoor space via the first air outlet 22. Moreover, the internal air can also be guided to the outside via the second air inlet 31, the second air outlet 32 and the outlet portion 122 in sequence. Based on this, the internal air can exchange with the external air to provide a desired ventilation function while purifying the air.

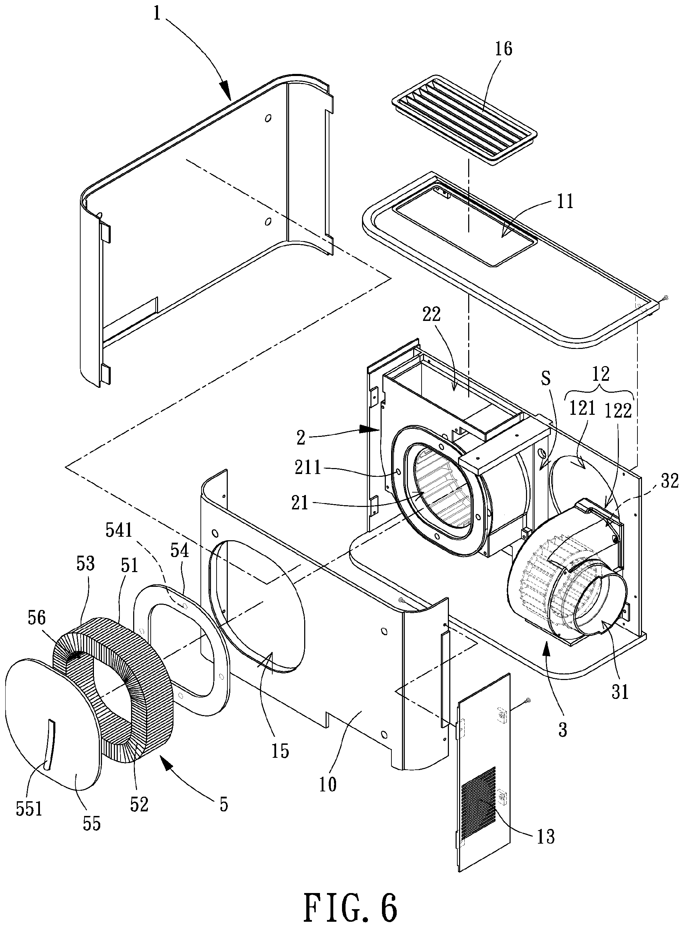

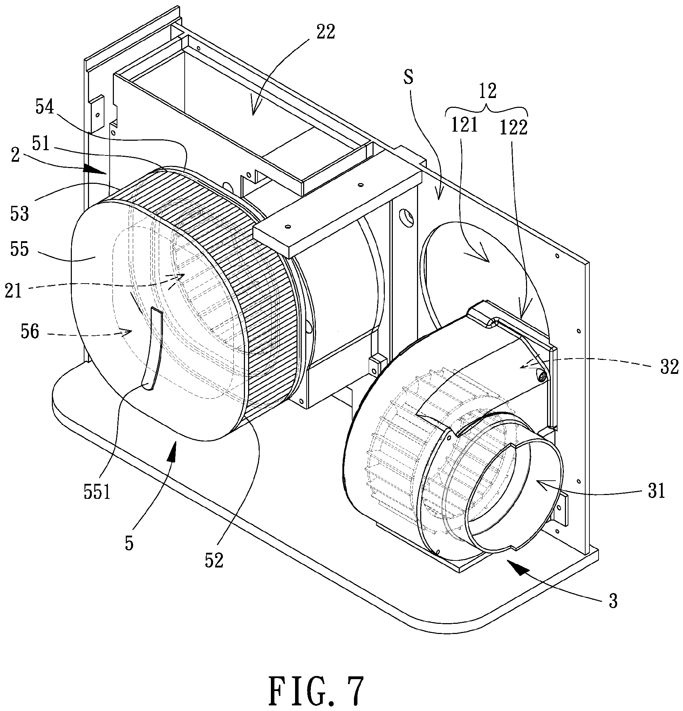

FIGS. 6 and 7 show an air exchanging device according to a third embodiment of the invention. The third embodiment is substantially the same as the first embodiment except for that the air exchanging device in the third embodiment further includes a second filter 5. The second filter 5 is coupled with the first fan unit 2 and covers the first air inlet 21. The second filter 5 includes a first end 51, a second end 52, and a hole 56 extending from the first end 51 to the second end 52. A filtration wall 53 is disposed between the first end 51 and the second end 52. In addition, a third side board 54 includes a plurality of second positioning portions 541. The first fan unit 2 includes a plurality of first positioning portions 211 surrounding the first air inlet 21. The plurality of second positioning portions 541 can be coupled with the plurality of first positioning portions 211 by ways of magnetic attraction, engagement or adhesion.

In addition, referring to FIGS. 6, 7, 8 and 9, the second end 52 of the second filter 5 is coupled with a second side board 55, such that the hole 56 forms an air-guiding space 57. The filtration wall 53 of the second filter 5 is exposed to the outside. Since the first end 51 and the second end 52 of the second filter 5 are covered, the air flows through the filtration wall 53 and into the air-guiding space 57. Thus, a smooth air-guiding effect is attained. Besides, the housing 1 includes an inner member 10. The inner member 10 includes a fifth through-hole 15 corresponding to the second filter 5, such that the second filter 5 can be installed into or withdrawn from the compartment **S** via the fifth through-hole 15. The second side board 55 includes a second pulling portion 551. When it is needed to clean or change the second filter 5, the second filter 5 can be withdrawn from the compartment **S** via the fifth through-hole 15. The second pulling portion 551 preferably can be in the form of a grip or a strip.

Referring to FIGS. 6 and 7, it is noted that the second filter 5 preferably includes a filtration material which can provide a filtration function and meets the air quality standard of PM 2.5 or similar. Based on this, the second filter 5 is able to filter out the particulate matter of around 2.5 µm or above, ensuring that the air flowing through the first air inlet 21 of the first fan unit 2 meets the air quality standard of PM 2.5. Besides, the second filter 5 may be a High Efficiency Particulate Air filter (HEPA filter), an Ultra Low Penetration Air filter (ULPA filter) or a Volatile Organic Compounds Air filter (VOC filter). One of the filters can be chosen depending on the requirement. However, the above is not used to limit the invention.

Referring to FIGS. 6, 7, 8 and 9, based on the above structure, the external air that is drawn from the inlet portion 121 of the second through-hole 12 will pass through the filtration wall 53 of the second filter 5 during the operation of the first fan unit 2 and the second fan unit 3. The filtration wall 53 of the second filter 5 filters the air passing therethrough. The filtered air is guided to the air-guiding space 57. Then, the air is guided to the first air inlet 21 of the first fan unit 2 and then into the indoor space via the first air outlet 22. Moreover, the internal air can also be guided to the outside via the second air inlet 31, the second air outlet 32 and the outlet portion 122 in sequence. Based on this, the internal air can exchange with the external air to provide a desired ventilation function while purifying the air.

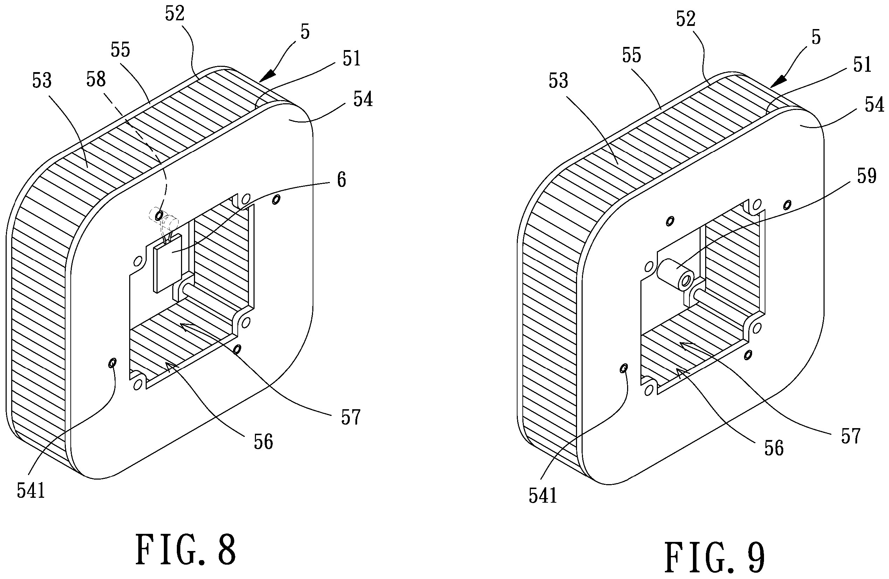

Referring to FIGS. 8 and 9, an air freshener 6 is disposed in the air-guiding space 57 of the second filter 5 in order to provide a pleasant smell, as shown in FIG. 8. The air freshener 6 is preferably hanged on a post 58 which may be in the form of a hook. The post 58 is preferably located on the second side board 55 and extends into the air-guiding space 57 of the second filter 5. The air freshener 6 may be a sachet or a bag with dried flowers. Alternatively, a receiving portion 59 may be provided as shown in FIG. 9. The receiving portion 59 may receive fragrance liquor. The receiving portion 59 is preferably formed at one side of the second side board 55 and extends into the air-guiding space 57 of the second filter 5. The fragrance liquor may be an essential oil or perfume. Thus, the filtered air can bring the fragrance of the air freshener 6 or the fragrance liquor into the first fan unit 2 through the air-guiding space 57. Accordingly, the filtered air and the fragrance are discharged from the first air outlet 22 to scent the air with fragrance, relaxing the users mentally and physically.

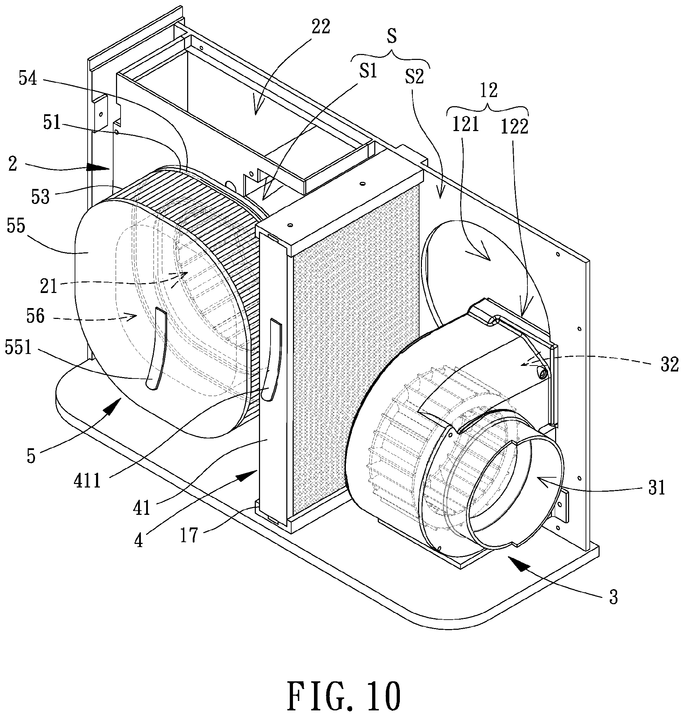

FIG. 10 shows an air exchanging device according to a fourth embodiment of the invention. The fourth embodiment is substantially the same as the second and third embodiments except for that both the first filter 4 and the second filter 5 are included in the fourth embodiment. The second filter 5 has interstices smaller than or equal to that of the first filter 4. The first filter 4 is preferably a VOC filter (Volatile Organic Compounds Air filter). The second filter 5 preferably includes a filtration material which meets the air quality standard of PM 2.5. In this arrangement, the external air that is drawn from the inlet portion 121 of the second through-hole 12 will pass through the first filter 4 and the second filter 5 in sequence. After two layers of filtration process provided by the first filter 4 and the second filter 5, the filtered air is guided into the indoor space via the first air inlet 21 and the first air outlet 22 in sequence. Moreover, the internal air can be guided to the outer space via the second air inlet 31, the second air outlet 32 and the outlet portion 122 in sequence. In this arrangement, the internal air and the external air can exchange with each other to provide a desired ventilation effect while the filtration of the air is attained.

In summary, the air exchanging device according to the invention simply requires that a single installation hole be formed on the wall, such that the second through-hole of the housing of the air exchanging device intercommunicates with a tube assembly mounted to the installation hole of the wall. In this arrangement, during the operation of the first and second fan units, the external air can be guided from the second through-hole to the first air inlet of the first fan unit, and then is guided to the indoor space via the first air outlet of the first fan unit. Furthermore, the internal air can also be guided from the second air inlet to the second air outlet of the second fan unit, and then is guided to the outdoor space via the second through-hole. Accordingly, the air is circulated between the indoor and outdoor spaces to provide a desired ventilation effect while the small particles and unpleasant smell of the air can be filtered out to provide an air-cleaning effect.

## Claims

1. An air exchanging device comprising:
a housing (1) having a compartment (S), wherein the housing (1) has a first through-hole (11), a second through-hole (12) and a third through-hole (13);
a first fan unit (2) received in the compartment (S) and including a first air inlet (21) intercommunicating with the second through-hole (12), and a first air outlet (22) intercommunicating with the first through-hole (11); and
a second fan unit (3) received in the compartment (S) and including a second air inlet (31) intercommunicating with the third through-hole (13), and a second air outlet (32) intercommunicating with the second through-hole (12), wherein the air exchanging device is **characterized in** further comprising:
a second filter (5) coupled with the first fan unit (2) and covering the first air inlet (21), wherein the second filter (5) includes a first end (51), a second end (52), and a hole (56) extending from the first end (51) to the second end (52) thereof.

2. The air exchanging device as claimed in claim 1, **characterized in that** the second through-hole (12) includes an inlet portion (121) intercommunicating with the first air inlet (21), and an outlet portion (122) intercommunicating with the second air outlet (32), wherein the second through-hole (12) of the housing (1) is divided into the inlet portion (121) and the outlet portion (122) by an air guider (7'), and wherein the air guider (7') includes at least one tube assembly (7).

3. The air exchanging device as claimed in claim 2, **characterized in that** the tube assembly (7) includes a tube divider (71) disposed therein and dividing an interior of the tube assembly (7) into a first air channel (7a) and a second air channel (7b), wherein the first air channel (7a) intercommunicates with the inlet portion (121) of the second through-hole (12) and the second air channel (7b) intercommunicates with the outlet portion (122) of the second through-hole (12), and wherein the tube divider (71) is integrally formed with a plurality of fins (72) received in the first air channel (7a) and the second air channel (7b).

4. The air exchanging device as claimed in claim 1, **characterized in** further comprising a first filter (4) disposed in the compartment (S) and dividing the compartment (S) into a first compartment (S1) and a second compartment (S2).

5. The air exchanging device as claimed in claim 4, **characterized in that** the first filter (4) includes a first side board (41) having a first pulling portion (411), wherein the housing (1) includes an inner member (10) having a fourth through-hole (14) corresponding to the first side board (41), wherein the housing (1) includes a rail (17), and wherein the first filter (4) is detachably mounted to the rail (17).

6. The air exchanging device as claimed in claim 1, **characterized in that** the housing (1) includes a grid plate (16) disposed at the first through-hole (11).

7. The air exchanging device as claimed in claim 1, **characterized in that** a filtration wall (53) is disposed between the first end (51) and the second end (52) of the second filter (5).

8. The air exchanging device as claimed in claim 1, **characterized in that** the first end (51) of the second filter (5) is coupled with a third side board (54), wherein the first fan unit (2) includes a plurality of first positioning portions (211) surrounding the first air inlet (21) thereof, wherein the third side board (54) includes a plurality of second positioning portions (541) coupled with the plurality of first positioning portions (211), and wherein the plurality of second positioning portions (541) is coupled with the plurality of first positioning portions (211) by ways of magnetic attraction, engagement or adhesion.

9. The air exchanging device as claimed in claim 1, **characterized in that** the second end (52) of the second filter (5) is coupled with a second side board (55), wherein the hole (56) forms an air-guiding space (57), wherein the second side board (55) includes a second pulling portion (551), and wherein the housing (1) includes an inner member (10) having a fifth through-hole (15) corresponding to the second filter (5).

10. The air exchanging device as claimed in claim 9, **characterized in that** an air freshener (6) is disposed in the air-guiding space (57) and is hanged on a post or a hook.

11. The air exchanging device as claimed in claim 9, **characterized in that** the air-guiding space (57) includes a receiving portion receiving a fragrance liquor.

12. The air exchanging device as claimed in claim 4, **characterized in that** the second filter (5) has interstices smaller than or equal to that of the first filter (4), and wherein the first filter (4) is a Volatile Organic Compounds Air filter (VOC filter) and the second filter (5) comprises a filtration material which meets an air quality standard of PM 2.5.

13. The air exchanging device as claimed in claim 4, **characterized in that** each of the first filter (4) and the second filter (5) comprises a filtration material which meets an air quality standard of PM 2.5, a High Efficiency Particulate Air filter (HEPA filter), an Ultra Low Penetration Air filter (ULPA filter), or a Volatile Organic Compounds Air filter (VOC filter).

14. The air exchanging device as claimed in claim 1, **characterized in that** the first through-hole (11), the second through-hole (12) and the third through-hole (13) are formed on different faces of the housing (1).

## Patentansprüche

1. Luftaustauschvorrichtung, umfassend:
ein Gehäuse (1) mit einem Kompartiment (S), wobei das Gehäuse ein erstes Durchgangsloch (11), ein zweites Durchgangsloch (12) und ein drittes Durchgangsloch (13) aufweist;
eine erste Lüftereinheit (2), die in dem Kompartiment (S) aufgenommen ist und einen ersten Lufteinlass (21), der mit dem zweiten Durchgangsloch (12) in gegenseitiger Kommunikation steht, und einen ersten Luftauslass (22) umfasst, der mit dem ersten Durchgangsloch in gegenseitiger Kommunikation steht; und
eine zweite Lüftereinheit (3), die in dem Kompartiment (S) aufgenommen ist und einen zweiten Lufteinlass (31), der mit dem dritten Durchgangsloch (13) in gegenseitiger Kommunikation steht, und einen zweiten Luftauslass (32) umfasst, der mit dem zweiten Durchgangsloch (12) in gegenseitiger Kommunikation steht, wobei die Luftaustauschvorrichtung **dadurch gekennzeichnet ist, dass** sie ferner umfasst:
einen zweiten Filter (5), der mit der ersten Lüftereinheit (2) gekoppelt ist und den ersten Lufteinlass (21) bedeckt, wobei der zweite Filter (5) ein erstes Ende (51), ein zweites Ende (52) und ein Loch (56) umfasst, das sich von dem ersten Ende (51) zu dem zweiten Ende desselben erstreckt.

2. Luftaustauschvorrichtung nach Anspruch 1, **dadurch gekennzeichnet, dass** das zweite Durchgangsloch (12) einen Einlassabschnitt (21), der mit dem ersten Lufteinlass (21) in gegenseitiger Kommunikation steht, und einen Auslassabschnitt (122) umfasst, der mit dem zweiten Luftauslass (32) in gegenseitiger Kommunikation steht, wobei das zweite Durchgangsloch (12) des Gehäuses (1) durch eine Luftführungseinrichtung (7') in den Einlassabschnitt (121) und den Auslassabschnitt (122) unterteilt wird, und wobei die Luftführungseinrichtung (7') mindestens eine Röhrenanordnung (7) umfasst.

3. Luftaustauschvorrichtung nach Anspruch 2, **dadurch gekennzeichnet, dass** die Röhrenanordnung (7) eine in ihrem Inneren angeordnete Röhrenteilungseinrichtung (71) umfasst, die ein Inneres der Röhrenanordnung (7) in einen ersten Luftkanal (7a) und einen zweiten Luftkanal (7b) unterteilt, wobei der erste Luftkanal (7a) mit dem Einlassabschnitt (121) des zweiten Durchgangslochs (12) in gegenseitiger Kommunikation steht und der zweite Luftkanal (7b) mit dem Auslassabschnitt (122) des zweiten Durchgangslochs (12) in gegenseitiger Kommunikation steht, und wobei die Röhrenteilungseinrichtung (71) integral mit mehreren Rippen (72) ausgebildet ist, die in dem ersten Luftkanal (7a) und dem zweiten Luftkanal (7b) aufgenommen sind.

4. Luftaustauschvorrichtung nach Anspruch 1, **dadurch gekennzeichnet, dass** sie ferner einen ersten Filter (4) umfasst, der in dem Kompartiment (S) angeordnet ist und das Kompartiment (S) in ein erstes Kompartiment (S1) und ein zweites Kompartiment (S2) unterteilt.

5. Luftaustauschvorrichtung nach Anspruch 4, **dadurch gekennzeichnet, dass** der erste Filter (4) eine erste Seitenplatte (41) mit einem ersten Ziehabschnitt (411) umfasst, wobei das Gehäuse (1) ein Innenelement (10) mit einem vierten Durchgangsloch (14) umfasst, das der ersten Seitenplatte (41) zugeordnet ist, wobei das Gehäuse (1) eine Schiene (17) umfasst, und wobei der erste Filter (4) abnehmbar an der Schiene (17) montiert ist.

6. Luftaustauschvorrichtung nach Anspruch 1, **dadurch gekennzeichnet, dass** das Gehäuse (1) eine Gitterplatte (16) umfasst, die an dem ersten Durchgangsloch (11) angeordnet ist.

7. Luftaustauschvorrichtung nach Anspruch 1, **dadurch gekennzeichnet, dass** zwischen dem ersten Ende (51) und dem zweiten Ende (52) des zweiten Filters (5) eine Filtrationswand (53) angeordnet ist.

8. Luftaustauschvorrichtung nach Anspruch 1, **dadurch gekennzeichnet, dass** das erste Ende (51) des zweiten Filters (5) mit einer dritten Seitenplatte (54) gekoppelt ist, wobei die erste Lüftereinheit (2) mehrere erste Positionierabschnitte (211) umfasst, die den ersten Lufteinlass (21) davon umgeben, wobei die dritte Seitenplatte (54) mehrere zweite Positionierabschnitte (541) umfasst, die mit den mehreren ersten Positionierabschnitten (211) gekoppelt sind, und wobei die mehreren zweiten Positionierabschnitte (541) mittels magnetischer Anziehung, Wirkverbindung oder Adhäsion mit den mehreren ersten Positionierabschnitten (211) gekoppelt sind.

9. Luftaustauschvorrichtung nach Anspruch 1, **dadurch gekennzeichnet, dass** das zweite Ende (52) des zweiten Filters (5) mit einer zweiten Seitenplatte (55) gekoppelt ist, wobei das Loch (56) einen Luftleitraum (57) bildet, wobei die zweite Seitenplatte (55) einen zweiten Ziehabschnitt (551) umfasst, und wobei das Gehäuse (1) ein Innenelement (10) umfasst, das ein fünftes Durchgangsloch (15) aufweist, das dem zweiten Filter (5) zugeordnet ist.

10. Luftaustauschvorrichtung nach Anspruch 9, **dadurch gekennzeichnet, dass** in dem Luftleitraum (57) ein Lufterfrischer (6) angeordnet ist und an einem Pfeiler oder Haken eingehängt ist.

11. Luftaustauschvorrichtung nach Anspruch 9, **dadurch gekennzeichnet, dass** der Luftleitraum (57) einen Aufnahmeabschnitt umfasst, in dem eine Duftflüssigkeit aufgenommen ist.

12. Luftaustauschvorrichtung nach Anspruch 4, **dadurch gekennzeichnet, dass** der zweite Filter (5) Zwischenabstände hat, die kleiner oder gleich denen des ersten Filters (4) sind, und wobei der erste Filter (4) ein Volatile Organic Compounds (VOC)-Luftfilter ist, und der zweite Filter (5) ein Filtrationsmaterial umfasst, das einen Luftqualitätsstandard PM2,5 erfüllt.

13. Luftaustauschvorrichtung nach Anspruch 4, **dadurch gekennzeichnet, dass** sowohl der erste Filter (4) als auch der zweite Filter (5) ein Filtrationsmaterial, das einen Luftqualitätsstandard PM2,5 erfüllt, einen High Efficiency Particulate Air - Filter (HEPA-Filter), einen Ultra Low Penetration Air - Filter (ULPA-Filter) oder einen Volatile Organic Compound (VOC)-Luftfilter umfasst.

14. Luftaustauschvorrichtung nach Anspruch 1, **dadurch gekennzeichnet, dass** das erste Durchgangsloch (11), das zweite Durchgangsloch (12) und das dritte Durchgangsloch (13) an unterschiedlichen Flächen des Gehäuses (1) ausgebildet sind.

## Revendications

1. Un dispositif d'échange d'air comprenant :
un boîtier (1) ayant un compartiment (S), dans lequel le boîtier (1) a un premier trou débouchant (11), un deuxième trou débouchant (12) et un troisième trou débouchant (13) ;
une première unité de ventilateur (2) reçue dans le compartiment (S) et comprenant une première entrée d'air (21) communiquant avec le deuxième trou débouchant (12), et une première sortie d'air (22) communiquant avec le premier trou débouchant (11) ; et
une seconde unité de ventilateur (3) reçue dans le compartiment (S) et comprenant une seconde entrée d'air (31) communiquant avec le troisième trou débouchant (13), et une seconde sortie d'air (32) communiquant avec le deuxième trou débouchant (12), dans lequel le dispositif d'échange d'air est **caractérisé en ce qu'**il comprend en outre :
un second filtre (5) couplé avec la première unité de ventilateur (2) et recouvrant la première entrée d'air (21), dans lequel le second filtre (5) comprend une première extrémité (51), une seconde extrémité (52) et un trou (56) s'étendant à partir de la première extrémité (51) jusqu'à sa seconde extrémité (52).

2. Le dispositif d'échange d'air selon la revendication 1, **caractérisé en ce que** le deuxième trou débouchant (12) comprend une partie d'entrée (121) intercommuniquant avec la première entrée d'air (21) et une partie de sortie (122) intercommuniquant avec la seconde sortie d'air (32), dans lequel le deuxième trou débouchant (12) du boîtier (1) est divisé en une partie d'entrée (121) et en une partie de sortie (122) par un dispositif de guidage d'air (7'), et dans lequel le dispositif de guidage d'air (7') comprend au moins un ensemble de tube (7).

3. Le dispositif d'échange d'air selon la revendication 2, **caractérisé en ce que** l'ensemble de tube (7) comprend un diviseur de tube (71) disposé à l'intérieur de ce dernier et divisant un intérieur de l'ensemble de tube (7) en un premier canal d'air (7a) et en un second canal d'air (7b), dans lequel le premier canal d'air (7a) communique avec la partie d'entrée (121) du deuxième trou débouchant (12) et le second canal d'air (7b) communique avec la partie de sortie (122) du deuxième trou débouchant (12), et dans lequel le diviseur de tube (71) est formé, de manière solidaire, avec une pluralité d'ailettes (72) reçues dans le premier canal d'air (7a) et le second canal d'air (7b).

4. Le dispositif d'échange d'air selon la revendication 1, **caractérisé en ce qu'**il comprend en outre un premier filtre (4) disposé dans le compartiment (S) et divisant le compartiment (S) en un premier compartiment (S1) et en un second compartiment (S2).

5. Le dispositif d'échange d'air selon la revendication 4, **caractérisé en ce que** le premier filtre (4) comprend une première plaque latérale (41) ayant une première partie de traction (411), dans lequel le boîtier (1) comprend un élément interne (10) ayant un quatrième trou débouchant (14) correspondant à la première plaque latérale (41), dans lequel le boîtier (1) comprend un rail (17) et dans lequel le premier filtre (4) est monté de manière détachable sur le rail (17).

6. Le dispositif d'échange d'air selon la revendication 1, **caractérisé en ce que** le boîtier (1) comprend une plaque de grille (16) disposée au niveau du premier trou débouchant (11).

7. Le dispositif d'échange d'air selon la revendication 1, **caractérisé en ce qu'**une paroi de filtration (53) est disposée entre la première extrémité (51) et la seconde extrémité (52) du second filtre (5).

8. Le dispositif d'échange d'air selon la revendication 1, **caractérisé en ce que** la première extrémité (51) du second filtre (5) est couplée avec une troisième plaque latérale (54), dans lequel la première unité de ventilateur (2) comprend une pluralité de premières parties de positionnement (211) entourant sa première entrée d'air (21), dans lequel la troisième plaque latérale (54) comprend une pluralité de secondes parties de positionnement (541) couplée à la pluralité de premières parties de positionnement (211), et dans lequel la pluralité de secondes parties de positionnement (541) est couplée à la pluralité de premières parties de positionnement (211) au moyen d'attraction magnétique, de mise en prise ou d'adhésion.

9. Le dispositif d'échange d'air selon la revendication 1, **caractérisé en ce que** la seconde extrémité (52) du second filtre (5) est couplée à une deuxième plaque latérale (55), dans lequel le trou (56) forme un espace de guidage d'air (57), dans lequel la deuxième plaque latérale (55) comprend une seconde partie de traction (551), et dans lequel le boîtier (1) comprend un élément interne (10) ayant un cinquième trou débouchant (15) correspondant au second filtre (5).

10. Le dispositif d'échange d'air selon la revendication 9, **caractérisé en ce qu'**un purificateur d'air (6) est disposé dans l'espace de guidage d'air (57) et est accroché à un montant ou à un crochet.

11. Le dispositif d'échange d'air selon la revendication 9, **caractérisé en ce que** l'espace de guidage d'air (57) comprend une partie de réception recevant une liqueur de parfum.

12. Le dispositif d'échange d'air selon la revendication 4, **caractérisé en ce que** le second filtre (5) a des interstices inférieurs ou égaux à celui du premier filtre (4) et dans lequel le premier filtre (4) est un filtre à air à composés volatils organiques (filtre VOC) et le second filtre (5) comprend un matériau de filtration qui satisfait une norme de qualité de l'air PM 2.5.

13. Le dispositif d'échange d'air selon la revendication 4, **caractérisé en ce que** chacun parmi le premier filtre (4) et le second filtre (5) comprend un matériau de filtration qui satisfait une norme de qualité de l'air PM 2.5, un filtre à particules aériennes de haute efficacité (filtre HEPA), un filtre à air à ultra faible pénétration (filtre ULPA) ou un filtre à air à composés volatils organiques (filtre VOC).

14. Le dispositif d'échange d'air selon la revendication 1, **caractérisé en ce que** le premier trou débouchant (11), le deuxième trou débouchant (12) et le troisième trou débouchant (13) sont formés sur différentes faces du boîtier (1).
